# EUROPEAN PATENT APPLICATION

(11) **EP 3 313 066 A1**
(43) Date of publication of application: **25.04.2018**
(21) Application number: 15895227.5
(22) Date of filing: 17.06.2015
(51) Int. Cl.: H04N 7/18, H04N 5/232

(54) **INFORMATION INTELLIGENT COLLECTION METHOD AND APPARATUS**

(71) Applicant: Memo Robotek Inc., Beijing 100083 (CN)
(72) Inventor: SHA, Li, San Jose, California 95138 (US)
(74) Representative: Boult Wade Tennant
(86) International application number: PCT/CN2015/081708
(87) International publication number: WO 2016/201654

(57) **Abstract**

The present disclosure provides methods and devices for intelligent information collection, having the functions of information detection, information collection, information identification, information storage, and information transmission. During the information collection, the device may automatically identify and select target information and store it, and selectively transmit the target information to a specific information receiving terminal in a specific transmission mode.

## Description

### TECHNICAL FIELD

The present disclosure relates to methods and devices for intelligent information collection, and more particularly, to methods and devices for automatically identifying and selecting target information.

### BACKGROUND

In people's daily life, videos, such as videos that record travels, activities, parties, or baby's growth are generally taken by a camera or video camera. During the video recording, human intervention is required for the scene selection, target positioning, video taking, and storage, as well as video selection, which may take a lot of time and effort. Thus it is difficult to meet the needs of people having a fast-paced life.

A safety monitoring system generally utilizes a remote camera for continuous shooting. Pictures may be stored and transmitted to a monitoring terminal for analysis by a user. The user may not need to appear in the shooting scene, but have to spend a lot of time and effort to filter the contents taken. Further, if a high-definition shooting mode is used, it will bring great pressure to the backing store.

### SUMMARY

A method for intelligent information collection may comprise the following processes: starting information collection when a variation of information in the background environment is detected to exceed a certain threshold; automatically identifying and selecting of a target scene during the information collection; If a target scene exists, the method may further include recognizing the target scene or directly storing the information related to the target scene. If no target scene exists, the method may stop collecting the information. The identification of the target scene may include determining whether the information contains the content that is analogous to the target scene. For example, it is determined whether there is information similar to or equivalent to the target scene. The target scene may be a scene with specific features obtained based on the historical record statistics, or a scene defined based on the external input parameters, or a scene defined combined with the historical data statistics and external input parameters. The feature of the target scene may include either one of the brightness and contrast of the scene, the moving object in the scene and the target object (e.g., the face or outline of a person) in the scene, or any combination thereof. The automatic identification and selection of the target scene may be dependent on a machine training technique. Through the machine training, the device for intelligent collecting the information collection may automatically identify and select the target scene. In one embodiment, the machine training includes recording and learning of user-related information in the information storage module, including but not limited to user preferences, using habits and setting information. Further, the user's using habits include but not limited to the viewing, deleting, storing or sending of contents and features of the information by the user through the device. The user's setting information includes but not limited to the description of the target scene, the setting of the corresponding parameters, and marking or other operations on the interested information content by the user.

On the other hand, by the method for intelligent information collection, the stored video may be further transmitted to a specific receiving terminal through a data transmission module. The receiving terminal may be any device having a video reading function.

A device for intelligent information collection may include the following modules: an information detection module for detecting a variation of the information in the background environment; a video recording module that will open when the variation of the information in the background environment exceeds a certain threshold; a scene identification module for automatically identifying and selecting a video having a target scene; a video storage module for storing a target video. The automatic identification and selection of the target scene may be dependent on the machine training.

On the other hand, the device for intelligent information collection may further include a data transmission module for transmitting the stored video to a specific receiving terminal. The receiving terminal may be any device having a video reading function.

### BRIEF DESCRIPTION OF THE DRAWINGS

The drawings described herein are used to provide a further understanding of the present disclosure and constitute a part of the disclosure. The exemplary embodiments of the disclosure and descriptions thereof are for the purpose of illustration and description only and are not intended to limit the scope of the present disclosure.
FIG. 1 is a schematic diagram of a device for information collection;
FIG. 2 is a schematic diagram of an exemplary information detection module;
FIG. 3 is a schematic diagram of an exemplary information identification module;
FIG. 4 is an exemplary flowchart implemented on an information identification module;
FIG. 5 is an exemplary flowchart implemented on a device for information collection;
FIG. 6 is an exemplary flowchart implemented on a device for information collection; and
FIG. 7 is an exemplary flowchart implemented on a device for information collection.

### DETAILED DESCRIPTIONS

The present disclosure is further described in terms of exemplary embodiments. These exemplary embodiments are described in detail with reference to the drawings. Apparently, these figures are non-limiting exemplary embodiments. For ordinary persons skilled in the art, the present disclosure may be applied to other similar situations based on the drawings without making the creative effort.

As shown in the specification and claims, the singular forms "a," "an," and "the" may be intended to include the plural forms as well, unless the context clearly indicates otherwise. In general, the terms "comprise" and "include" specify the presence of stated steps and elements, but do not preclude the presence or addition of other steps or elements. The term "based on" indicates "at least partially based on." The term "one embodiment" refers to "at least one embodiment"; the term "another embodiment" indicates "at least one another embodiment." The relevant definitions of other terms may be described in the following descriptions.

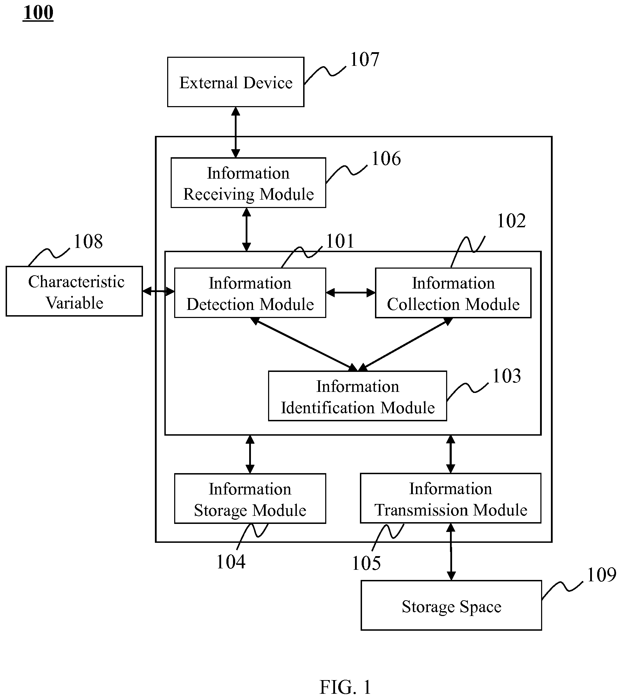

FIG. 1 is a schematic diagram illustrating a device for information collection according to an embodiment of the present disclosure. As shown in FIG. 1, an information collection system 100 may include an information detection module 101, an information collection module 102, an information identification module 103, an information storage module 104, an information transmission module 105, and an information receiving module 106. The modules in the information collection system 100 may be connected via a wired or wireless connection. Any module may be local or remote and may be connected to other modules through a network. The correspondence between the modules may be one-to-one or one-to-many. For example, the information storage module 104 may be connected to the information detection module 101 and information identification module 103.

The information detection module 101, the information storage module 104, and the information receiving module 106 does not necessarily all exist, but may be alternative according to the change of the application scenario. For example, in some information collection systems, the information receiving module 106 may be omitted without affecting the operation of the whole system. As another example, in some information collection systems, the information detection module 101 may be omitted, and the scene may be recognized directly. The above example is merely for illustrating that the information detection module 101, the information storage module 104, and the information receiving module 106 may not be necessary modules of the system. For persons having ordinary skills in the art, multiple variations or modifications may be made to the configuration of these modules to make improvements and changes. However, those variations and modifications do not depart from the scope of the present disclosure.

The information collection system 100 may have information interaction with a user. The user may refer to an individual and/or any other information source that may have information interaction with the information collection system 100. The information source may include but not limited to a substance that is detectable, such as acoustic wave, electromagnetic wave, humidity, temperature, air pressure, or a network information source, including but not limited to a server on the Internet.

The information detection module 101 may be configured to detect an external information 108 having a characteristic variable, and determine whether to actuate other related modules based on the detection result. For example, when detecting a change of a specific type of information in the scene, the information detection module 101 may actuate the information collection module 102. The information collection module 102 may be configured to collect information related to the scene. Additionally, the information collection module 102 may automatically identify and collect specific or common information with the help of the information identification module 103. The information identification module 103 may determine and identify information based on one or more of the type, the feature, the size and the transmission mode of the collected information. In some embodiments, the information detection module 101, the information collection module 102, and the information identification module 103 may interact with each other. The information collection module 102 may generate a control signal to the information detection module 101 based on the collected information. The information identification module 103 may generated a control signal to the information detection module 101 and the information collection module 102 based on the signal to be identified. For example, when the information identification module 103 fails to identify information that meets the condition, the feedback information may be the inactivation of the information detection module 101 or the information collection module 102. The information collected by the information collection module 102 or identified by the information identification module 103 may be stored in the information storage module 104. Under certain conditions, the information transmission module 105 may transmit the information stored in the information storage module 104 or directly transmit the information received from the information collection module 102 and the information identification module 103 to a storage space 109 having a storage function. In some embodiments, the information storage module 104 and the information transmission module 105 may also transmit feedback information to the information detection module 101, the information collection module 102, the information identification module 103, or the like, or any combination thereof. For example, the features of the information identified by the information identification module 103 may be modified or improved based on the features of the information stored in the information storage module 104, which may make the information identification more accurate. The information collection system 100 may be connected to an external device 107 via the information receiving module 106. The received information may include but not limited to the control information, scene information, and parameter information, etc. The external device 107 may include a network device having a wired or wireless transmission capability. The external device 107 may be, such as but not limited to, a mobile phone, a computer, a wearable device, a cloud device, and a web server.

It should be noted that FIG. 1 may include additional modules and the one or more above mentioned modules may be omitted. The modules in the system may be connected via a wired or wireless connection. Any of the modules may be local or remote and may be connected to other modules through the network. The correspondence between the modules may be one-to-one or one-to-many. For example, an information detection module may be connected to multiple information receiving modules simultaneously. One or more of the information detection module 101, the information collection module 102, and the information identification module 103 may be respectively connected to the information storage module 104 and the information transmission module 105. The information receiving module 106 may also be directly connected to the information storage module 104. The connection between the modules may be fixed or may be changed in real time based on an external input or in the application process of the system. For ordinary persons skilled in the art, a module may be added, or one or more above mentioned modules may be omitted or recombined in a non-innovative manner. For example, the information collection module 102 and the information identification module 103 may integrate into a single module that can collect and identify information. The information identification module 103 may identify and evaluate information when the information is processed by other modules. The information transmission module 105 may include a determination unit configured to detect the transmission environment to determine whether to actuate information transmission or selectively transmit all or part of the information accordingly.

The composition and structure of the information collection system 100 according to some embodiments of the present disclosure may be described below with reference to the modules thereof.

The information detection module 101 may be configured to track and detect the change of information in a scene. The information in the scene may include but not limited to sound, odor, gas (e.g., the type or concentration of the gas), image, temperature, humidity, pressure (including a pressure acting on liquid or solid, such as air pressure, gravity and pressure), electromagnetic wave (such as but not limited to radio wave, microwave, infrared light, visible light, ultraviolet light, X-ray, and gamma-ray), speed, acceleration, and interaction between objects. The detected information may include one or more types of the above-mentioned information. It is also possible to determine the importance of different types of information according to assigned weights, an algorithm, or a self-learning function of the system.

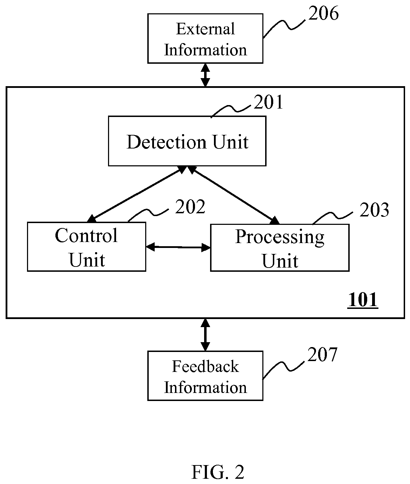

FIG. 2 illustrates an exemplary information detection module 101. As shown in FIG. 2, the information detection module 101 may include a detection unit 201, a control unit 202, and a processing unit 203.

The detection unit 201 may include one type of sensor or different types of sensors for detecting different types of information. The detection unit 201 may also utilize existing devices, such as but not limited to a sound detector, an odor detector, a gas detector, an image detector, a temperature detector, a humidity detector, a pressure detector, an electromagnetic wave detector (e.g., a radio wave detector, a visible light detector, an infrared light detector, and an ultraviolet light detector), a speed detector, and an acceleration detector.

The control unit 202 may control the operating state of the information detection module 101. For example, the control unit 202 may set the operating time of the detection unit 201. The detection unit 201 may detect information continuously, or at a certain frequency, or in a preset time interval (e.g., a minute, a quarter of an hour, an hour, or any other adjustable time interval). The frequency or time interval for information detection may also be dynamically adjusted according to the needs and the scenes. For example, in the day, the information detection module 101 may detect information in every quarter of an hour, and each detection may last for one minute. At night, the information detection may be performed in every hour and each detection may last for half a minute.

The processing unit 203 may process the information acquired by the detection unit 201 and communicate with other modules based on the processed information. For example, the information detection module 101 may determine whether to actuate or inactivate other modules based on the intensity of a detected signal. In another embodiment, the information detection module 101 may determine the detection status based on the feedback information 207 from one or more other modules in the device. For example, if the information identification module 103 fails to identify information that meets the condition, it may transmit a control signal to the information detection module 101, and the information detection module 101 may in turn stop or continue the detection based on the control signal. If the information identification module 103 identifies information that meets the condition. For example, when identifying target information in a target scene or scene, the information identification module 103 may transmit a control signal to the information collection module 102 to adjust the collection state of the information collection module 102. In other embodiments, the detection threshold of the information detection module 101 may be variable. The information detection module 101 may determine whether to track and detect the information in the scene based on factors such as the amplitude, frequency, and range of the change of the information in the scene. For example, the detection threshold may be related to the change rate of the brightness of the scene. A subsequent operation may be triggered when the rapid change of the brightness exceeds the detection threshold of the information detection module 101. For example, when the curtain is opened, and the sun shines into the scene. The brightness of the scene may change rapidly, which may actuate other modules.

It should be noted that the information type and information detection method described above are provided merely to facilitate the understanding of the present disclosure. The information detection module 101 may determine the type of the information to be detected according to different situations, for example, determine the detection method based on the features of the information type according to user settings or the self-learning function of the system. The variations and modifications made by ordinary persons skilled in the art may also fall within the scope of the present disclosure. For example, the system may analyze statistical data to identify a specific person and make a judgment accordingly based on environmental information (such as temperature and speed change) or time information when common persons appear.

The above description regarding the functions and components of the information detection module is merely an example and shall not be considered as the only feasible embodiment. For persons having ordinary skills in the art, various modifications and changes in the forms and details of the application of the above method and system may occur according to the actual hardware conditions without departing from the principles in the present disclosure. For example, the detection unit 201, the control unit 202, and the processing unit 203 in the information detection module 101 may be omitted depending on the application scenario. For example, for some detection modules, the control unit 202 or the processing unit 203 may be are integrated into an external control unit, or processing unit and the external control unit or processing unit may be shared with other modules of the information collection system. The units in the detection module may be connected to each other via a wired or wireless connection. Any unit may be local or remote. The information detection, information control, and information processing may be performed in real-time or non-real-time. The control unit and the processing unit may be actuated by the detection unit. The information control and information processing may be synchronous or asynchronous.

When the information detection module 101 detects a change of the information, the information collection module 102 may be actuated. The change of the information may be a change of a parameter or multiple parameters of information. The collected information may include but not limited to the sound, odor, gas (e.g., the type or concentration of the gas), image, temperature, humidity, pressure (e.g., pressure acting on the liquid or solid, such as air pressure, gravity and pressure), electromagnetic wave (such as but not limited to, radio wave, microwave, infrared light, visible light, ultraviolet light, X-ray and gamma-ray), speed, acceleration, and interaction between objects. The information collection module 102 may be any device capable of collecting information. In some embodiments, the information collection module 102 may include an element capable of collecting a specific type of information. The collected information may be converted into other signals, and the collected information or converted signals may be transmitted to other modules. For example, sound and image may be collected simultaneously by a camera or video camera. In addition, the information collection module 102 may utilize technologies that are now widely adopted and commercialized, and techniques that are being studied but are not widely commercialized or used. For example, the information collection module 102 may utilize techniques to collect odor, movement, thought and feeling, 3D information, etc. The above example may merely be an exemplary embodiment. For persons having ordinary skills in the art, various modifications and changes of the configurations of the information collection module 102 may occur according to the different needs without departing from the principles in the present disclosure. For example, the information detection module 101 may be omitted, and the information collection module 102 may be actuated by external information 207or be operated in a non-trigger mode.

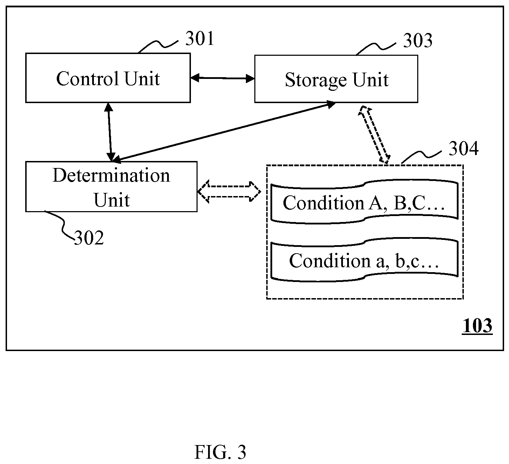

The information identification module 103 may determine whether the collected information has a predetermined feature. For example, it may determine whether a feature of the information is equal to or exceeds a certain threshold. The conditions related to the feature and threshold may be set manually or be determined according to a machine training technique. FIG. 3 illustrates a schematic diagram of the information identification module 103. The information identification module 103 may include a control unit 301, a determination unit 302, and a storage unit 303. The control unit 301 may control the operating state of the information identification module 103 based on information received from other modules in the information collection system 100 or an external source. The control unit 301 may also control other modules in the information collection system 100 based on the information received from the determination unit 302 or the storage unit 303, or transmit information to other modules. For example, after the information identification module 103 identifies a target scene or a target object in a scene, the information identification module 103 may transmit a control signal to the information collection module 102 to cause the information collection module 102 to adjust the information collection mode (such as adjusting the shooting range and shooting focus of a camera, or automatically tracking the target object). The determination unit 302 may analyze information collected by the information collection module 102 or processed information to determine whether the information or the processed information is target information. The information stored in the storage unit 303 may include a parameter related to information identification, historical target information, the type of information need to be recognized, the condition 304 related to information identification, or the like, or any combination thereof. The storage unit 303 may be a separate unit in the information identification module 103 or integrated into the information storage module 104. In some embodiments, the conditions 304 related to information identification with respect to different types of information may be different. For example, the information identification module 103 may identify a feature or multiple features of sound, odor, gas (e.g., the type or concentration of the gas), image, temperature, humidity, pressure (including pressure acting on the liquid or solid, such as air pressure, gravity and pressure), electromagnetic wave (such as, but not limited to, radio wave, microwave, infrared light, visible light, ultraviolet light, X-ray and gamma-ray), speed, acceleration, and interaction between objects. Different weights may be assigned to different features according to user needs.

The above description of the information identification module is merely an example and shall not be considered as the only feasible embodiment. Obviously, for persons having ordinary skills in the art, various modifications and changes in the forms and details of the application of the information identification method may occur after understanding the principle of information detection module without departing from the principles in the present disclosure. For example, the control unit, the determination unit, and the storage unit may be omitted. For example, the operation of the system may not be affected when the control unit or the storage unit is omitted.

In some embodiments, the technique of identifying a sound may include but not limited to determining whether a feature of the sound, such as fluency, frequency, timbre, or intensity of the sound meets a certain condition. The technique of identifying an image may include but not limited to determine whether a feature of the image, such as image quality, movement or a target person in the image meets a certain condition. Additionally, the technique of identifying the image quality of an image may include but not limited to determine whether a feature of the image, such as brightness, contrast, or resolution of the image meets a certain condition. The technique of identifying the movement of an object in an image may include but not limited to determine whether the image includes the object (or person) having a specific movement mode. The technique of identifying a target person may include any relevant techniques that can be used to recognize a target person with a certain feature, such as but not limited to a people recognition technique, an age recognition technique, or a facial expression recognition technique. It should be noted that the above techniques for identifying the sound, image, and other information are merely provided for illustration purposes. The techniques may be flexibly adjusted depending on the practical scene and are not limited to the above-mentioned examples. For example, the condition related to information identification may include a plurality of conditions 304 related to multilevel determinations. For example, a first-level determination (determining whether a feature, such as brightness, contrast or resolution meets a certain condition) may be made to an image. If the first-level determination meets the condition, the next-level determination may be made (for example, determining whether there is a target person or a moving target in the image). In the multilevel determination process, the information identification module 103 may process different types of recognized information. For example, different storage methods may be used, or different weights may be assigned to different types of information that meet different conditions. It should be noted that the first-level determination condition and the second-level determination condition described above are merely provided for illustration purposes. The combination and order of the multilevel determination conditions in the actual application may be determined based on user settings or an actual demand.

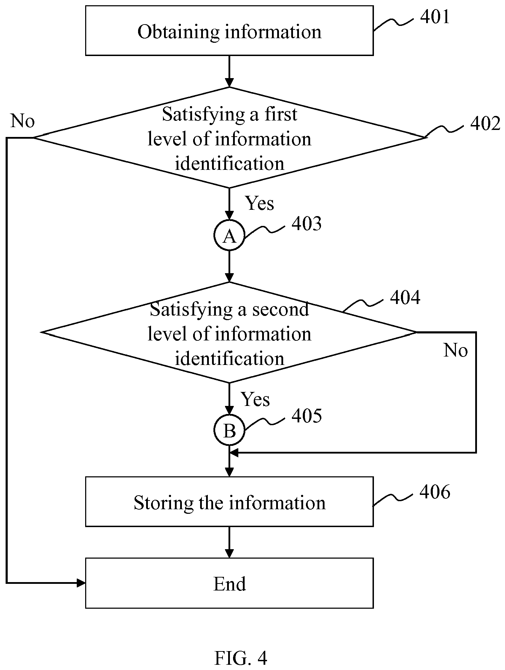

FIG. 4 illustrates a flowchart of a multilevel determination performed by an information identification module. In 401, the information identification module 103 may acquire information to be identified. In 402, a determination as to whether the information meets a first-level recognition condition may be made. If the first-level recognition condition is not met, the recognition process may be terminated. If the first-level recognition condition is met, in 403, the information may be marked (for example, priority or a weighting factor may be assigned; the information with a high priority or weighting factor may have a higher priority to be stored, transmitted, or analyzed in the subsequent process). In 404, a second-level recognition may be performed. If the second-level recognition condition is not met, the information may be stored. If the second level recognition condition is met, the information may be marked in 405 (for example, priority or a weighting factor may be assigned) and the information is stored in 406. The first-level recognition and the second-level recognition may be performed on different kinds of information (for example, the first-level recognition may be performed on a sound, and the second-level recognition may be performed on an image). The first-level recognition and the second-level recognition may also be performed on different attributes of a same kind of information. For example, the first-level recognition may include a determination as to whether the brightness, contrast, or resolution of a picture meet a condition, and the second-level recognition may include a determination as to whether a target person is in the picture. For ordinary persons skilled in the art, an additional multilevel determination condition may be added, or one or more of the multilevel determination conditions may be omitted in a non-innovative manner. For example, the information identification module 103 may only perform the first-level recognition on a certain attribute of the information. Alternatively, the information identification module 103 may perform a third-level recognition on other attributes of the information between the first-level recognition and the second-level recognition. The different levels of information identifications may also be performed simultaneously without a sequence.

The multilevel recognition conditions may be determined by the information collection system 100 based on a machine training technique. The information collection system 100 may be able to automatically recognize and select a target scene based on the machine training technique. The machine training may be performed in various ways, for example, by recording or learning user preferences, user habits, and user setting information in the storage unit 303 or the information storage module 104. The user habits may include but not limited to the features of the information viewed, deleted, stored, or sent by the user through an information collection device, and the user's feedback information regarding the determination made by the information collection device. The feedback information may include but not limited to, agreeing with the determination, not agreeing with the determination, or unresponsive to the determination. The user setting information may include but not limited to user's descriptions of a target scene, a setting of a parameter, a mark labeled on or an operation performed on interesting information by the user. For example, the machine may record or learn the subject or content of the information frequently viewed or processed by the user, and analyze, extract and summarize the corresponding subject or content features. The corresponding subject or content features may include but not limited to an acquired time, a range, a feature, or a change of feature of the collected information. For example, if the information frequently viewed or edited by the user appears at a relatively fixed time interval per day or week, the probability for the information collected within the time interval being target information may be relatively high. If the information frequently viewed or edited by the user appears in a certain position in the scene, the probability of the information related to the position being target information may be relatively high. Further, the image feature of the information may include the brightness, contrast, and saturation of the captured image, or the content depicted in the image (including but not limited to features of a moving object or and character in the image). The machine may constantly modify an algorithm by analyzing the resulting data or feedback data in the process of self-learning, and finally, achieve an automatic recognition and selection of a target scene.

The above description regarding the machine training or autonomous learning is merely a specific example and shall not be considered as the only feasible embodiment. Obviously, ordinary persons skilled in the art may modify and change the form and detail of the methods and steps related to machine training after they understand the basic principle of the machine training without departing from the principle of the present disclosure, but such modifications and changes may also fall within the scope of the present disclosure.

It should be noted that the above way of recording and analyzing user's operation history by a machine may be an exemplary way of machine training. It may be possible for ordinary persons skilled in the art to modify the way of the machine training. For example, the machine may obtain relevant information from a specific source, such as from the network including information posted or viewed by a user, or information copied from other sources and transmitted to the machine by the user. The machine may analyze the features of target information that the user is interested in and further develop a criterion for information selection accordingly.

The information storage module 104 may store the information obtained and/or processed by the information identification module 103. It may also store the intermediate information obtained or processed by the information detection module 101, the information collection module 102, the information transmission module 105, and the information receiving module 106. The information storage module 104 may store the above information indiscriminately or may prioritize different information based on the satisfying features of the information or marks labeled on the information by other modules. For example, if the quality, movement, and movement features of an image satisfy conditions, and only two of the features of another image satisfy conditions, the former image may be assigned with a higher priority than the latter one. The information storage module 104 may utilize different storage ways for storing different information. The information may be stored as a file in the information storage module 104 for transmission, viewing, deletion, or any other use at any time. The information storage module 104 may be a local storage device or be stored on a network storage device via the network.

The network storage device described herein may include a storage device on a storage system such as a Direct Attached Storage, a Network Attached Storage, and a Storage Area Network. The network storage device and other modules in the information collection system 100 may be connected to each other via a local area network (e.g., Ethernet) or a wide area network. The connection may be a wired or wireless connection. The storage device may include but not limited to various types of common storage devices, such as a solid-state storage device (a solid state drive or a solid state hybrid drive), a hard disk drive, an USB flash memory, a memory stick, a memory card (such as a CF and a SD), other drivers (such as a CD, a DVD, an HD DVD, or a Blu-ray), a random access memories (RAM), or a read-only memory (ROM). The RAM may include but not limited to a decade counter tube, a selectron tube, a delay line memory, a Williams tube, a dynamic random access memory (DRAM), a static random access memory (SRAM), a thyristor random access memory (T-RAM), and a zero-capacitor random access memory (Z-RAM). The ROM may include but not limited to a magnetic bubble memory, a magnetic button line memory, a thin film memory, a magnetic plated wire memory, a magnetic core memory, a magnetic drum memory, an optical disc drive, a hard disk, a magnetic tape, an early NVRAM (nonvolatile memory), a phase change memory, a magnetoresistive random access memory, a ferroelectric random access memory, a nonvolatile SRAM, a flash memory, an electrically erasable programmable read-only memory, an erasable programmable read-only memory, a programmable read-only memory, a mask ROM, a floating connection gate random access memory, a nano random access memory, a racetrack memory, a resistive random access memory, and a programmable metallization cell. The above-mentioned storage devices may merely be examples and the storage device that used in the network storage device may not limit thereto.

The information transmission module 105 may utilize various networks for data transmission. The networks may include but not limited to a wired network, a wireless personal area network (Bluetooth or Wi-Fi), a wireless local area network, a wireless metropolitan area network, a wireless wide area network, a cellular network, a mobile network, or a global area network. The information transmission module 105 may detect the network environment of the information receiving module 106. If the network is suitable for the information transmission, the information transmission module 105 may select a suitable transmission policy to transmit information based on the size of the file or the priority of the information to be transmitted. For example, when the network environment is poor, some small files may be transmitted. A large video file may be transmitted when the network environment is good. When the network environment is good and the videos to be transmitted have appropriate sizes, the video that is more valuable for the user (i.e., the video with the highest priority) may be transmitted first. The information transmission module 105 may also be configured with a data copy function.

The information receiving module 106 may be used to receive information from an external device 107. In some embodiments, the information transmitted may be an operation on the information collection system 100 inputted by a user via an input interface. For example, the information may include user's edit, selection of the information collected by the information collection system 100, user's setting or modifications regarding one or more system parameters. In some embodiments, the information receiving module 106 may receive the data from a third party device. For example, the information receiving module 106 may receive information posted by the user on the network (e.g., Facebook and Youtube). Further, the information collection system 100 may analyze the information posted by the user on the network, and develop an information identification criterion that conforms to user's habit.

The storage space 109 may refer to various devices that can be used for information reading, such as but not limited to a desktop computer, a notebook computer, a personal digital assistant (PDA), a tablet computer, a mobile terminal (e.g., a mobile phone or a handheld Internet device), or a television (such as but not limited to a network television, etc.). In addition, the storage space 109 may be a network device (e.g., a cloud and a network server) or a network node. The storage space 109 may be a storage unit dependent on the information collection system 100 or may be a storage unit independent of the information collection system 100. The storage space 109 may utilize technologies that are now widely adopted and commercialized, and also technologies that are being studied but are not widely commercialized or used. It should be noted that the examples of the information transmission module 105 and the storage space 109 described above are merely provided to facilitate the understanding the present disclosure. In an actual implementation, the information transmission module 105 may select an information receiving module based on the features of the information to be transmitted, and the information transmission module 105 may also adopt a suitable transmission mode according to the storage condition of the storage space 109. The modifications made by ordinary persons skilled in the art also fall within the scope of the present disclosure. For example, the storage space 109 may be a mobile terminal. The information transmission module 105 may utilize a wireless network (e.g., Bluetooth, WLAN, and Wi-Fi), a mobile network (2G, 3G or 4G signal), or other connection techniques (VPN, shared network and NFC), and the information transmission module 105 may determine a transmission mode based on the network environment of the mobile terminal and the size and/or priority of the information file.

It should be noted that FIG. 1 is merely a schematic diagram of an exemplary information collection device which may not include all modules of the information collection device. The modules illustrated in FIG. 1 may be implemented by a plurality of components, or a plurality of the modules may be implemented by the same component. In addition, a module may have additional functions other than that illustrated in the schematic diagram. A module may be replaced, streamlined or expanded to realize the functions thereof. For example, the information detection module 101 illustrated in FIG. 1 may be a sound detector, an odor detector, a gas detector, an image detector, a temperature detector, a humidity detector, a pressure detector, an electromagnetic wave detector (e.g., a radio wave detector, a visible light detector, an infrared light detector, and an ultraviolet light detector), a speed detector, and an acceleration detector. The above-mentioned detectors may be used separately as the information detection module 101 or be used in combination to form the information detection module 101.

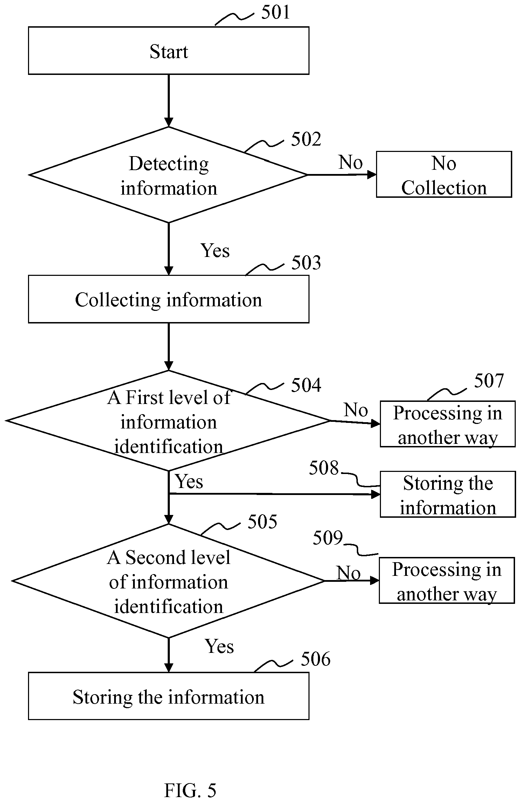

FIG. 5 is an implementation scene in which the information collection system 100 identifies and selects a target scene. The location where the information is collected may be a place set by a user, room, outdoor space, building, or a specific open area. For illustration purposes, it may be assumed that the location for information collection is a living room or a baby room. Before the information collection, a detection of information may be performed in 502. For illustration purposes, it may be assumed that the information detection module 101 is an infrared detector. The information collection module 102 may be turned on when the infrared detection module detects a change of a heat source and the change exceeds a threshold set in advance or set based on a self-learning function of the system. For example, the sun shines into the room through the window, and the temperature may not change much in a short time. The information collection module 102 may not be actuated if the change does not exceed the threshold set in advance or set based on the self-learning function of the system. When a heat source suddenly enters the detection range, for example, a person or an animal enters the room, or the operating temperature of an indoor heater changes rapidly, the information collection module 102 may be actuated to shoot if the infrared detection module detects that the change of the heat source exceeds the threshold set in advance or set based on the self-learning function of the system. It is possible to filter out some valueless scenes and reduce the user's work to filter information based on the information detection. The information collection module 102 may be actuated after the information detection module 101 detects a change of specific information, and thereby to reduce the energy waste caused by the continuous collection of information. It should be noted that the descriptions provided here are merely for illustration purposes and the information to be detected may include one or more other types of information, such as sound, odor, gas (e.g., type or concentration of the gas), image, temperature, humidity, pressure (including pressure acting on the liquid or solid, such as air pressure, gravity and pressure), electromagnetic wave (such as, but not limited to, radio wave, microwave, infrared light, visible light, ultraviolet light, X-ray and gamma ray), speed, acceleration, and interaction between objects. Accordingly, the information detection module 101 may include one or more of detectors, such as a sound detector, an odor detector, a gas detector, an image detector, a temperature detector, a humidity detector, a pressure detector, an electromagnetic wave detector (e.g., radio wave detector, a visible light detector, an infrared light detector, and an ultraviolet light detector), a speed detector, and an acceleration detector.

After the information collection module 102 is actuated, a first-level of information identification may be performed in 504. In the first level of information identification in 540, the information may be filtered based on one or more features of the information. In the present disclosure, the features of the information used in the first-level of information identification may be determined according to different situations. For illustration purposes, it may be assumed that the information to be identified is a video, the features of the information may include but not limited to the brightness, contrast, movement feature, and relationship and interaction between objects in the video. For example, when the collected information is a video, and the feature is the brightness or contrast of the scene, the video may be stored and be processed when the brightness or contrast of the scene meet a standard set in advance or set based on the self-learning function of the system. The movement feature of the scene may include but not limited to whether there is an object that is moving or moving in a particular way in the scene. If the feature of the video satisfies the condition, the video may be stored in 508. Otherwise another operation (the operation 507) may be performed on the video. The operation may include but not limited to stopping the information collection, deleting the cache, or the like. In some embodiments, the change of the heat source detected by the information detection module 101 may be caused by an indoor heating device (not the target scene). In 502, the information collection module 102 may be actuated after a change of the information is detected. In the first level of information identification, if the information identification module 103 does not recognize a significant moving object within the information collection range, the scene may not meet the condition of the first-level of information identification and the shooting may be stopped. It should be noted that the first-level of information identification in 504 is not limited to the examples described above and may also include an operation to further filter the information after the information detection in 502. For example, in the first level of information identification for sound, one or more features of the sound such as the fluency, frequency, timbre or intensity may be analyzed to determine whether the features meet a certain condition.

The second level of information identification in 505 may further filter out target information. For illustration purposes, it may be assumed that the information to be recognized is a video, the second-level of information identification in 505 may include some or all of the recognition conditions in the first-level of information identification in 504, or include different recognition conditions from those in the first-level of information identification in 504. For example, the second-level of information identification in 505 may include but not limited to determining whether there is a target person or other objects that are set in advance or set based on the self-learning function of the system in the information. The information identification technique may include but not limited to a face recognition technique and a body recognition technique. In an actual implementation, a video screenshot may be performed. If the screenshot includes specific information related to a specific object, a determination as for whether the specific object is a target object may be performed according to an information identification technique. Additionally, an analysis may be performed on a selected video in a certain period of time to extract the part that changes in the period of time. For example, if a user is more interested in photographing a child, a video in which a younger character appears may be considered to be more valuable. In another example, different family members may occupy different volumes in a certain video, and a determination as for whether the video is a target video may be determined according to the different volumes of different family members. For example, if a user is more interested in photographing a child, the video including a small-sized character may be more likely to be a target video, and the video may be identified to be more valuable. The content may have a high value for a user if it is determined to be a target scene after a second-level of information identification. In FIG. 5, the information in different steps, for example, the information in 506, 508, or 509 may be subsequently processed according to the network environment, the information priority, or user settings.

It should be noted that the second-level of information identification in 505 may not be limited to the examples described above and may include other techniques of information filtering on the basis of the first-level of information identification. For example, a third-level of information identification for sound may include but not limited to determining an emotional coloring of the sound, such as determining whether the sound is laughter or crying, determining whether the tone is calm or agitated. It should be noted that FIG. 5 may not include all steps for the information collection device to recognize and select a target scene. The steps illustrated in the figure may not be necessary steps for information collection. For ordinary persons skilled in the art, one or more additional steps may be added or one or more of the steps in FIG. 5 may be omitted or recombined to achieve other embodiments in a non-innovative manner. For example, the detection step or another step may be omitted, or the order of steps of different levels of information identification may be changed, or one or more recognition techniques may be reused, and such modifications may also fall within the scope of the present disclosure.
The information collection system 100 may automatically identify and select a target scene based on a machine training technique. The machine training may be performed in various ways, for example, the machine may determine whether the information collected is target information by recording or learning user habits and user setting information. The user habits may include but not limited to the contents and features of the information viewed, deleted, stored or sent by a user. The user setting information may include but not limited to a description of a target scene, a setting of a parameter, and a mark labeled or an operation performed on interesting information by the user. The machine may record or learn the subject or content of the information frequently viewed or processed by the user, and analyze, extract and summarize the corresponding subject or content features. The corresponding subject or content features may include but not limited to an acquired time, a range, a feature, or a change of feature of the collected information. For example, if the information frequently viewed or edited by the user appears at a relatively fixed time interval per day or week, the probability for the information collected within the time interval being target information may be relatively high. If the information frequently viewed or edited by the user appears in a certain position in the scene, the probability of the information related to the position being target information may be relatively high. Further, the image feature of the information may include the brightness, contrast, and saturation of the captured image, or the content depicted in the image (including but not limited to features of a moving object or and character in the image).

The above description regarding the machine training or autonomous learning is merely a specific example and shall not be considered as the only feasible embodiment. Obviously, ordinary persons skilled in the art may modify and change the form and detail of the methods and steps related to machine training after they understand the basic principle of the machine training without departing from the principle of the present disclosure, but such modifications and changes may also fall within the scope of the present disclosure. It should be noted that the above way of recording and analyzing user's operation history by a machine may be an exemplary way of machine training. It may be possible for ordinary persons skilled in the art to modify the way of the machine training. For example, the machine may obtain relevant information from a specific source, such as from the network including information related to, be posted or viewed by a user, or information copied from other sources and transmitted to the machine by the user. The machine may analyze the features of target information that the user is interested in and further develop a criterion for information selection accordingly.

After the information identification, the information collection system 100 may select target information from the identified information and stores it. The information transmission module 105 transmits the target information to the storage space 109 of the information receiving terminal under a certain condition. For illustration purposes, an exemplary implementation of information transmission is illustrated below as an example. The information transmission module 105 may detect the network environment of the information receiving terminal. The information transmission module 105 may select a suitable transmission policy to transmit information based on the size of the file or the priority of the information to be transmitted after detecting the network environment. For example, when the network environment is poor, some small files may be transmitted. A large video file may be transmitted when the network environment is good. When the network environment is good and the videos to be transmitted have appropriate sizes, the video that is more valuable for the user (i.e., the video with the highest priority) may be transmitted first. The module may also be configured with a data copy function.

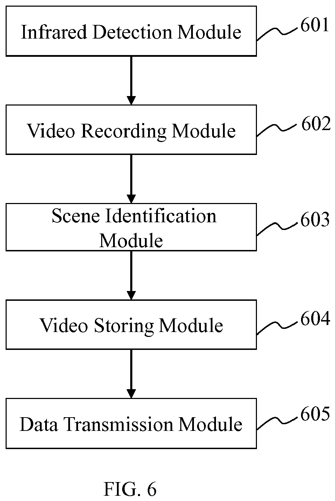

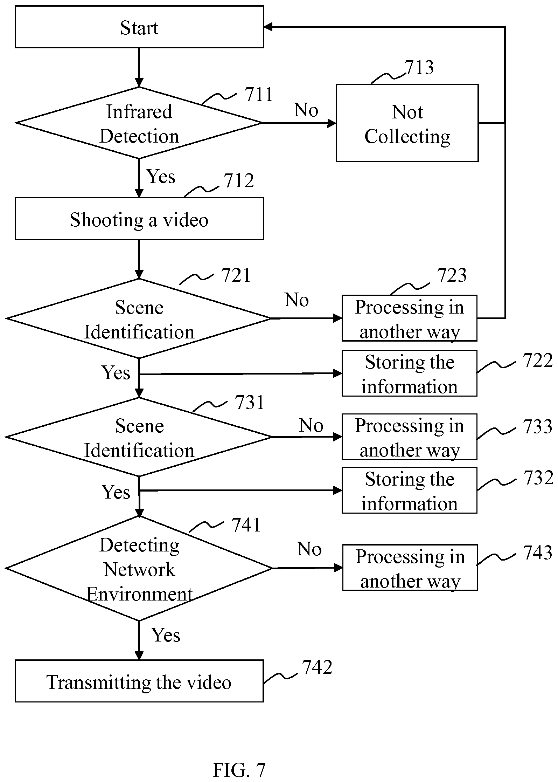

To facilitate the understanding of the present disclosure, the modules and flowcharts of an information collection device configured to collect video information using an infrared detection technology is described as an example. The detailed descriptions may be provided in FIGs. 6 and 7. FIG. 6 is an exemplary schematic diagram illustrating modules of an information collection device and FIG. 7 is an exemplary flowchart illustrating a process for recognizing and selecting a target scene in a video.

### Embodiment I

When the information collection device is opened, the infrared detection module 601 may be opened to capture the area to be shot (the operation 711). When the infrared detection module 601 detects a changing heat source in the captured area, the device may automatically turn on the video recording module 602 to start shooting a video (the operation 712), and the video may be stored in the cache. The scene recognition module 603 may identify features of the scene, such as the brightness, contrast, and movability of the scene (the operation 721) according to the conditions in the first-level of information identification. Based on user settings or self-setting of the device, the video satisfying one or more conditions of the first-level of information identification may be sorted (the operation 722). If the conditions of the first-level information identification are not met, another operation (the operation 713) may be performed, including stopping shooting and deleting the cached video. Further, the scene recognition module 603 may also perform a second-level of information identification on the video, such as a person or body recognition (the operation 731), and store a video that meets the condition(s), and/or improves the priority of the video in the subsequent processing (the operation 732). The data transmission module 605 may determine whether there is a suitable wireless network nearby (the operation 741). If there is a suitable network, the video may be transmitted to the receiving terminal based on the priority and the size of the stored video (the operation 742). If there is no proper network, the video may not be transmitted temporarily (step 743).

### Embodiment II

When the information collection device is opened, the infrared detection module 601 may be opened to capture the area to be shot (step 711). When the infrared detection module 601 detects a changing heat source in the captured area, the device may automatically turn on the video recording module 602 to start shooting a video (the operation 712), and the video may be stored in the cache. When the change of the heat source does not exceed a certain threshold, the shooting may be stopped (step 713). The scene recognition module 603 may identify the video based on features of the scene, such as brightness, contrast, and movability of the scene (the operation 721). If the video does not meet the condition(s), the video recording module 602 may be automatically closed, and the captured video may be deleted timely or processed by another way (the operation 723). The infrared detection module 601 may continue shooting the operation 711).

### Embodiment III

When the information collection device is opened, the infrared detection module 601 may be opened to capture the area to be shot (the operation 711). When the infrared detection module 601 detects a changing heat source in the captured area, the device may automatically turn on the video recording module 602 to start shooting a video (the operation 712), and the video may be stored in the cache. The scene recognition module 603 may identify features of the scene, such as the brightness, contrast and movability of the scene (the operation 721), and select and store videos satisfying the condition(s) (the operation 722). Further, the scene recognition module 603 may also perform a person or body recognition on the video (the operation 731). If a video does not meet the condition(s), the priority of the video may remain unchanged (the operation 733). The data transmission module 605 may determine whether there is a suitable wireless network nearby (step 741). If there is a suitable network, the video may be transmitted to the receiving terminal based on the size of the video (step 742).

### Embodiment IV:

When the information collection device is opened, the infrared detection module 601 may be opened to capture the area to be shot (the operation 711), and the video may be stored in the cache. The scene recognition module 603 may identify features of the scene (the operation 721), and select and store videos satisfying the condition(s) (the operation 722). Further, the scene recognition module 603 may also perform a human or body recognition on the video (the operation 731). If a video meets the condition(s), the priority of the video may be boosted (the operation 732). The data transmission module 605 may determine whether there is a suitable wireless network nearby (the operation 741). If there is a suitable network, the video may be transmitted to the receiving terminal based on the priority and size of the video (the operation 742).

### Embodiment V:

When the information collection device is opened, the infrared detection module 601 may be opened to capture the area to be shot (the operation 711). When the infrared detection module 601 detects a changing heat source in the captured area, the device may automatically turn on the video recording module 602 to start shooting a video (the operation 712), and the video may be stored in the cache. The scene recognition module 603 may perform a person or body recognition on the video (the operation 731). If a video meets the condition(s), the video may be stored. Further, the scene recognition module 603 may identify features of the scene, such as the brightness, contrast, and movability of the scene (the operation 721), and the priority of a video satisfying the condition(s) may be boosted. The data transmission module 605 may determine whether there is a suitable wireless network nearby (the operation 741). If there is a suitable network, the video may be transmitted to the receiving terminal based on the priority and size of the video (the operation 742).

### Embodiment VI:

When the information collection device is opened, the infrared detection module 601 may be opened to capture the area to be shot (the operation 711). When the infrared detection module 601 detects a changing heat source in the captured area, the device may automatically turn on the video recording module 602 to start shooting a video (the operation 712), and the video may be stored in the cache. The scene recognition module 603 may perform a person or body recognition on the video (the operation 731). If a video meets the condition(s), the video may be stored. Further, the scene recognition module 603 may identify features of the scene, such as the brightness, contrast, and movability of the scene (the operation 721), and the priority of a video not satisfying the condition(s) may remain unchanged. The data transmission module 605 may determine whether there is a suitable wireless network nearby (the operation 741). If there is a suitable network, the video may be transmitted to the receiving terminal based on the size of the video (the operation 742).

### Embodiment VII:

When the information collection device is opened, the infrared detection module 601 may be opened to capture the area to be shot (the operation 711). When the infrared detection module 601 detects a changing heat source in the captured area, the device may automatically turn on the video recording module 602 to start shooting a video (the operation 712), and the video may be stored in the cache. The scene recognition module 603 may identify features of the scene, such as the brightness, contrast, and movability of the scene (the operation 721), and select and store videos satisfying the condition(s) (the operation 722). Further, the scene recognition module 603 may also perform a person or body recognition on the video (the operation 731). If a video meets the condition(s), the priority of the video may be boosted (the operation 732). If the data transmission module 605 may do not detect a suitable wireless network nearby (the operation 741), the video may be not transmitted, or a user may copy the video manually from the video storing module 604.

The embodiments described above may merely be illustrative examples of the present disclosure. The description regarding the above-mentioned embodiments is specific and detailed, are not intended to limit the scope of the present disclosure. It should be noted that for ordinary persons skilled in the art, various modifications and improvements can be made without departing from the principles of the present disclosure. Any new feature, combination, method, and step disclosed in the specification may fall within the scope of the present disclosure.

## Claims

1. A method for intelligent information collection, comprising:
setting a variation threshold related to first information;
detecting a variation related to the first information;
in response to a determination that the variation related to the first information exceeds the variation threshold, starting information collection;
identifying and selecting a target scene, wherein the identification and selection of the target scene depend on a machine training technique; and
storing at least another information related to the target scene.

2. The method for intelligent information collection of claim 1, wherein the first information relates to at least one of sound, light, electromagnetic wave, pressure, gas, odor, speed, acceleration, image, heat source (or temperature), humidity, or pressure.

3. The method for intelligent information collection of claim 1, wherein a change of a heat source in a background is detected using an infrared detection technology.

4. The method for intelligent information collection of claim 1, wherein a change of a heat source includes the heat source entering to or leaving from a region.

5. The method for intelligent information collection of claim 1, wherein the machine training technique includes recording user selection of a feature of a scene by a machine.

6. The method for intelligent information collection of claim 5, wherein the feature of the scene includes a brightness and a contrast of the scene.

7. The method for intelligent information collection of claim 5, wherein the feature of the scene includes whether a moving object is present in the scene.

8. The method for intelligent information collection of claim 5, wherein the feature of the scene includes whether a target object is present in the scene.

9. The method for intelligent information collection of claim 8, wherein the target object includes a face and a body.

10. The method for intelligent information collection of claim 1, wherein the machine training is achieved based on a user's operation record, comprising the selection of a specific scene from a captured video or image.

11. The method for intelligent information collection of claim 1, further comprising transmitting a video based on a wireless network environment.

12. A device for intelligent information collection, comprising:
an information detection module configured to detect whether there is a variation related to information in an environment
a video recording module configured to operate when the variation related to the information exceeds a threshold;
a scene identification module configured to recognize and select a target scene;
a video storing module configured to store a video including the target scene; and
a data transmission module configured to transmit the video to a receiving terminal;
wherein, the recognition and selection of the target scene are performed based on a machine training technique.

13. The device for intelligent information collection of claim 12, wherein the information relates to at least one of sound, light, electromagnetic wave, pressure, gas, odor, speed, acceleration, image, heat source (or temperature), humidity, or pressure.

14. The device for intelligent information collection of claim 12, wherein the video recording module is a camera and has an automatic focusing and tracking function.

15. The device for intelligent information collection of claim 12, wherein the data transmission module is configured to determine whether there are transmission conditions including wired network, wireless network or file transfer in the environment.

16. The device for intelligent information collection of claim 12, wherein the receiving terminal is a device having a video reading function, and the receiving terminal is at least one of a desktop computer, a notebook computer, a personal digital assistant (PDA), a tablet computer, a mobile terminal, a television, a cloud.
